# EUROPEAN PATENT APPLICATION

(11) **EP 3 246 725 A1**
(43) Date of publication of application: **22.11.2017**
(21) Application number: 16170554.6
(22) Date of filing: 20.05.2016
(51) Int. Cl.: G01S 5/02, G01C 21/16, G01C 21/20

(54) **METHOD AND SYSTEM FOR CALCULATING A POSITION OF A MOBILE COMMUNICATION DEVICE WITHIN AN ENVIRONMENT**

(71) Applicant: Sony Mobile Communications Inc, Tokyo 140-0002 (JP)
(72) Inventor: GRÖNQVIST, Oskar, 235 99 Vellinge (SE); KARLSSON, Fredrik, 214 39 Malmö (SE)
(74) Representative: Awapatent AB

(57) **Abstract**

A position determining system and method for calculating a position of a mobile communication device (30) within an environment is presented. The position determining system comprises a memory comprising a logical model of the environment; a status signal receiver configured to receive a status signal pertaining to a status of the environment; and logical circuitry configured to: dynamically update the logical model of the environment based on the status signal; estimate one or more sets of geographic coordinates of the mobile communication device; map match the estimated one or more sets of geographic coordinates of the mobile communication device to the dynamically updated logical model of the environment; and calculate the position of the mobile communication device within the environment based on the map match.

## Description

### Technical field

The present invention relates to calculating a position of a mobile communication device within an environment.

### Background

For calculating a position of a mobile communication device map matching may be used. During map matching one or more sets of estimated geographic coordinates are matched to a logical model (map) of the environment (the real world). For indoor position of a mobile communication device sets of geographic coordinates may e.g. be estimated using an indoor positioning system comprising one or more stationary communication devices, e.g. location beacons. The estimated sets of geographic coordinates are thereafter map matched to the logical model of the environment, e.g. an office building, in order to calculate the position for the mobile communication device by relating the estimated sets of geographic coordinates to physical boundaries of the environment in the form of features being e.g. walls, furniture, etc. in an existing logical model (e.g. a plan drawing). Hence, not letting the calculated and reported position of the mobile communication device move through the physical boundaries, e.g. not move through a wall.

However, sometimes such the map matching does not give the correct reported position for the mobile communication device. Moreover, for some application there is a need for a more efficient map matching, especially for calculating a position for a mobile communication device indoors.

Hence, there is a need to improve positioning calculations.

### Summary of the invention

In view of the above, it is an object of the present invention to provide the above mentioned improvement.

According to a first aspect a method for calculating a position of a mobile communication device within an environment is provided. The method comprises estimating one or more sets of geographic coordinates of the mobile communication device; dynamically updating a logical model of the environment based on a status signal pertaining to a status of the environment; map matching the estimated one or more sets of geographic coordinates of the mobile communication device to the dynamically updated logical model of the environment; and calculating the position of the mobile communication device within the environment based on the map matching.

With the use of map matching to the dynamically updated logical model of the environment the calcuated position of the mobile communication device may be corrected to more accurately correspond to the actual position of the mobile communication device. Furthermore, by dynamically updating the logical model of the environment the map mathcing algorithm may be made more efficent.

The status signal may indicate a status of a logical feature of the logical model of the environment.

The status of the logical feature of the logical model of the environment may be any one of a status of a door indicating if the door is open or closed, and a status of a room indicating if the room is occupied or unoccupied.

The method may further comprise receiving the status signal indicating the status of the logical feature of the logical model of the environment from a sensor located within the environment.

Alternatively or in combination the status signal may indicate an accessibility attribute of a sub-area of the environment.

The accessibility attribute of the sub-area of the environment may be any one of if a room is booked or free, if a user of the mobile communication device is scheduled for participating in a meeting or not, and classification of a user of the mobile communication device.

According to a second aspect a position determining system for calculating a position of a mobile communication device within an environment is provided. The position determining system comprises a memory comprising a logical model of the environment; a status signal receiver configured to receive a status signal pertaining to a status of the environment; and logical circuitry. Wherein the logical circuitry is configured to: dynamically update the logical model of the environment based on the status signal; estimate one or more sets of geographic coordinates of the mobile communication device; map match the estimated one or more sets of geographic coordinates of the mobile communication device to the dynamically updated logical model of the environment; and calculate the position of the mobile communication device within the environment based on the map match.

The position determining system may further comprise a sensor configured to sense a status of a logical feature of the logical model of the environment and to communicate the status of the logical feature as the status signal.

The sensor may be a sensor sensing a status of a door being open or closed.

The sensor may be a sensor sensing a status of a room being occupied or unoccupied.

The logical circuitry may be is comprised in the mobile communication device.

The status signal receiver may be comprised in the mobile communication device.

The memory may be comprised in the mobile communication device and/or in a cloud service.

The position determining system may further comprise a stationary communication device configured to send a position signal comprising data pertaining to a set of geographical coordinates of the stationary communication device; wherein the mobile communication device comprises a position signal receiver configured to receive the position signal from the stationary communication device; and wherein the logical circuitry is configured to estimate one or more of the one or more sets of geographic coordinates of the mobile communication device based on the position signal.

The mobile communication device may comprise one or more built-in sensors configured to register data for estimating movement of the mobile communication device, wherein the logical circuitry further is configured to estimate movement of the mobile communication device based on the data registered by the one or more built-in sensors, and wherein the logical circuitry is configured to estimate one or more of the one or more sets of geographic coordinates of the mobile communication device based on the estimated movement of the mobile communication device.

Moreover the above mentioned features of the method, when applicable, apply to this second aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

The above and other aspects of the present invention will now be described in more detail, with reference to appended drawings showing embodiments of the invention. The figures should not be considered limiting the invention to the specific embodiment; instead they are used for explaining and understanding the invention.

As illustrated in the figures, the sizes of layers and regions are exaggerated for illustrative purposes and, thus, are provided to illustrate the general structures of embodiments of the present invention. Like reference numerals refer to like elements throughout.
Fig. 1 illustrates a position determining system for calculating a position of a mobile communication device within an environment.
Fig. 2 illustrates a detailed block diagram of an embodiment of the mobile communication device.
Fig. 3 is a block scheme of a method for calculating a position of a mobile communication device within an environment.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

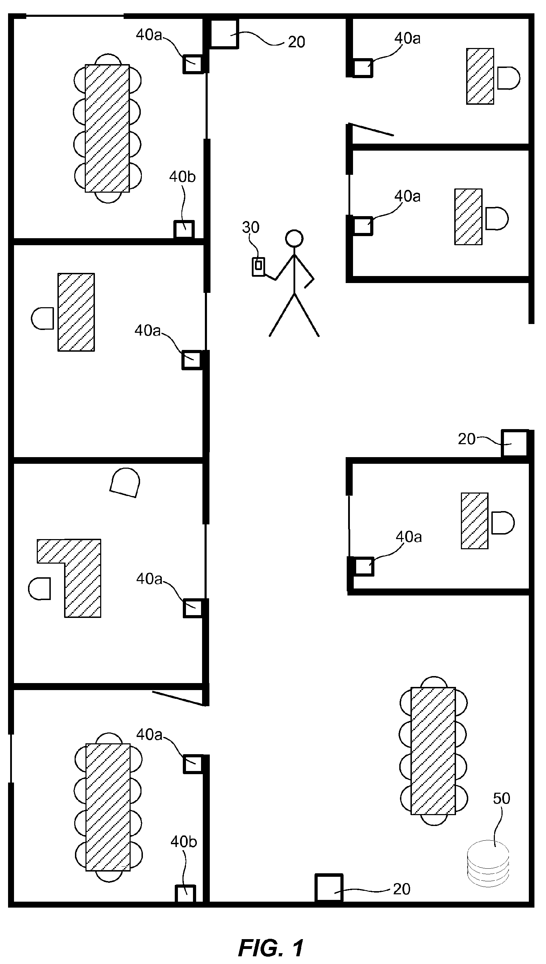

Fig. 1 illustrates a position determining system. The position determining system 10 is configured to calculate a position of a mobile communication device 30 within a logical model of an environment. Preferably the environment is an indoor environment such as an office building, a school, a factory, or other kind of buildings wherein it may be of interest to know the positions of users of the building.

In the in Fig. 1 illustrated embodiment of a position determining system 10 the position determining system 10 comprises one or more stationary communication device 20 and the mobile communication device 30. In Fig. 1 the position determining system 10 comprises a plurality of stationary communication devices 20.

Each stationary communication device 20 is configured to wirelessly send a position signal comprising data pertaining to a set of geographical coordinates of the stationary communication device 20. A set of geographical coordinates is a set of parameters pertaining to a geographical position. The data pertaining to the set of geographical coordinates may be coordinates actually describing the actual geographical position. Alternatively or in combination, the data pertaining to the set of geographical coordinates may be an identification code used for looking up the actual geographical position in a database. It may also not be nessessary to obtain an actual geographical position, sometimes only a local coordinate system is needed.

According to a non-limiting example the set of geographical coordinates are parameters pertaining to latitude, longitude and altitude. The stationary communication device 20 may be selected from the group comprising, preferably consisting of, a beacon, such as a WLAN beacon, Zigbee beacon, Wifi beacon, Bluetooth beacon, Bluetooth low energy beacon, Infrared beacon, ultrasound beacon, or RFID beacon, and a cellular network station.

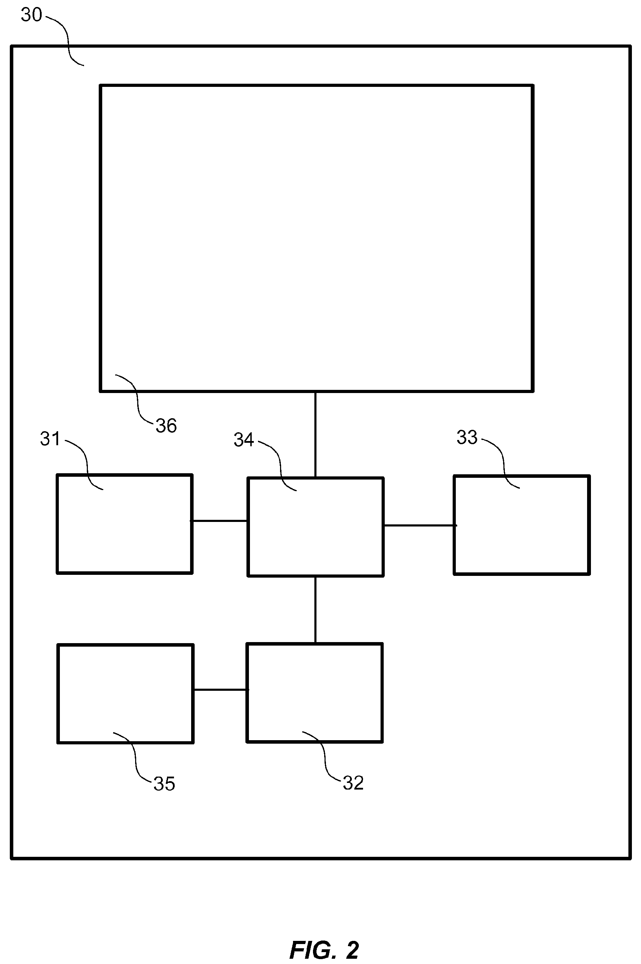

The mobile communication device 30, shown in more detail in Fig. 2, comprises a position signal receiver 31, a memory 32, a status signal receiver 33 and logical circuitry 34. The mobile communication device 30 may be configured as a single unit, e.g. a mobile phone, a tablet, a laptop, a smart watch, smart glasses, etc. Alternatively, the mobile communication device 30 may be configured out of a plurality of units, e.g. a mobile phone paired with a smart watch.

The position signal receiver 31 is configured to receive the position signal(s) from the stationary communication device(s) 20. The position signal receiver 31 may be selected from the group comprising, preferably consisting of, a WLAN receiver, a Zigbee receiver, a Wifi receiver, a Bluetooth receiver, a low energy Bluetooth receiver, an Infrared receiver, an ultrasound receiver, a RFID receiver, and a cellular network receiver.

The memory 32 is preferably a non-volatile memory. The memory 32 is configured to comprise the logical model of the environment. The logical model of the environment is a model describing the environment with logical features, e.g. walls, doors, stairs, elevators, furniture, etc. At least some of the logical features may delimit sub-areas of the environment. Such sub-areas may e.g. be in the form of a room or in the form or a security area of the environment having a specific security class.

The status signal receiver 33 is configured to receive a status signal pertaining to a status of the environment. The status signal may be a signal indicating a status of a logical feature of the logical model of the environment. Non-limiting examples of signals indicating a status of a logical feature are a signal indicating if a door is open or closed, a signal indicating if a room is occupied or unoccupied, a signal indicating floor location of an elevator, and a signal indicating locations of other people. Alternatively or in combination, the status signal may be a signal indicating accessibility attributes of a sub-area of the environment. Non-limiting examples of signals indicating accessibility attributes of a sub-area of the environment are a signal indicating if a user is scheduled to be present in a specific room or not, a signal indicating if a user is having security class for being in a security area, and a signal indicating a temporary blocked sub-area of the environment (e.g. a TV studio during broadcast).

The position determining system 10 may further comprise one or more sensors 40 configured to generate the status signal indicating a status of a logical feature of the logical model of the environment. Non-limiting examples of such sensors are a door sensor 40a configured to generate a signal indicating if a door is open or closed, a room sensor 40b configured to generate a signal indicating if a room is occupied or unoccupied, an elevator sensor indicating the floor of the present location of an elevator, a camera detecting presence of objects, e.g. people. The one or more sensors 40 may be configured to broadcast their respective status signal. The one or more sensors 40 may broadcast using any suitable wireless protocol. Non-limiting examples are Bluetooth, Bluetooth low energy, Zigbee, RFID, Wifi, IR and ultrasound. Hence, depending on the wireless protocol used the status signal receiver 33 is configured to receive information over the used wireless protocol.

The position determining system 10 may further comprise a database 50 comprising information pertaining to accessibility attributes of one or more sub-areas of the environment. The database 50 is configured to communicate signals indicating the accessibility attributes of the one or more sub-areas of the environment. As mentioned above non-limiting examples of signals indicating accessibility attributes of a sub-area of the environment are a signal indicating if a user is scheduled to be present in a specific room or not and a signal indicating if a user is having security class for being in a security area. The database 50 is configured to communicate with the status signal receiver 33. The database 50 is preferably configured to wirelessly communicate with the status signal receiver 33. In Fig. 1 the database 50 is illustrated as being located within the indoor environment, however, it is realized that the database 50 may be located anywhere as long as it may communicate with the rest of the position determining system 10.

As will be appreciated by one skilled in the art the logical circuitry 34 may be embodied as dedicated hardware circuitry and/or as processing circuitry running software. Accordingly, the logical circuitry 34 may take the form of an entirely hardware embodiment, an entirely software embodiment (including firmware, resident software, micro-code, etc.) or an embodiment combining software and hardware.

The logical circuitry 34 is configured to dynamically update the logical model of the environment based on the status signal. Hence, as soon as the status signal for a logical feature or an accessibility attribute is changed this is updated in the logical model of the environment. As mentioned above the status signal may e.g. indicate if a room is occupied or unoccupied, if a door is opened or closed, if a user of the mobile communication device is allowed to be in a sub-area of the environment (due to security classification), and/or if a user the mobile communication device is scheduled for a meeting in a room.

The logical circuitry 34 is further configured to estimate one or more sets of geographic coordinates of the mobile communication device 30. Again a set of geographic coordinates relates to a set of parameters pertaining to a geographical position. According to a non-limiting example, the set of geographical coordinates are parameters pertaining to latitude, longitude and altitude. The one or more sets of geographic coordinates of the mobile communication device 30 may be estimated using data from the received position signal(s). Alternatively or in combination, the one or more sets of geographic coordinates of the mobile communication device 30 may be estimated using dead reckoning. The dead reckoning may involve data from one or more built-in sensors 35 of the mobile communication device 30. The one or more built-in sensors 35 preferably include at least one of an accelerometer, a gyroscope, a magnetometer and a barometer. It may be noted that it is not necessary that all these sensors are used. It may also be noted that also other sensors may be used as the built-in sensors 35. The sensors above are suitable examples of built-in sensors 35 being affected by movement of the mobile communication device 30. It may also be noted that the above sensors or other built-in sensors 35 may be distributed and/or duplicated in more than one mobile communication unit of the mobile communication device 30. It is e.g. conceivable that built-in sensors 35 are provided in a mobile phone and in a smart watch, the mobile phone and the smart watch consituting two moble communication units comprised in one mobile communication device 30. Information from both units are used as input in the dead reckoning.

The logical circuitry 34 is further configured to map match the one or more estimated sets of geographic coordinates of the mobile communication device 30 to the dynamically updated logical model of the environment. One way to implement the map matching is by using any kind of Monte Carlo based algorithms, such as a particle filter. Alternatively or in combination, any variety of the Kalman filter may be used. Other possible implementations are least square based algorithms. The map matching is used to find non-valid results of the one or more estimated sets of geographic coordinates. The logical features of the logical model of the environment are used as physical boundaries or constrains for finding non-valid results. Hence, during the map matching the one or more estimated sets of geographic coordinates are compared with the logical features of the logical model of the environment. Sets of geographic coordinates not complying with the physical boundaries are disregarded as true position(s) of the mobile communication device 30. In this way moving through e.g. walls and closed doors or cutting trough a corner in a corridor are regarded as non-valid positions and are thus disregarded as the calculated or reported position of the mobile communication device 30. However, going through an open door is regarded as a valid position and is therefore regarded as a calculated or reported position of the mobile communication device 30. The accessibility attributes of the logical model of the environment are regarded in the map matching as probability parameters. For example, there is a low probability that of a user of a mobile communication device is entering a room wherein there is a scheduled meeting but she is not scheduled to participate. Contrary, there is a high probability that of a user of a mobile communication device is entering a room wherein there is a scheduled meeting but she is scheduled to participate. According to another example, there is a low probability that a user of a mobile communication device is entering an area wherein she has no security class to enter.

According to a non-limiting example the act of estimating one or more sets of geographic coordinates may be made in parallel with the act of map matching. The parallel execution of these two acts may be made by estimating a plurality of geographic coordinates at ones. The parallel execution of these two acts may alternatively or in combination be made interactively until a valid position of the mobile communication device 20 is found.

According to a non-limiting example the act of estimating one or more sets of geographic coordinates may be made before the act of map matching. According to this non-limiting example, a plurality of sets of geographic coordinates may first be estimated and thereafter the plurality of sets of geographic coordinates may be map matched with the logical model. Alternatively, a map matching of each estimated set of geographic coordinates is made before estimating a new set of geographic coordinates.

The logical circuitry 34 is further configured to calculate a position of the mobile communication device 30 within the environment based on the map match. The calculation may be made in various ways. According to non-limiting examples one of the valid results from the map matching may be used as the calculated position. The valid results may be attributed with weights, probablilities or probability distributions etc. The valid results are then filtered in order to find the best result.

According to another non-limiting example an average from a plurality of valid results from the map matching may be used as the calculated position. Again the valid results may be attributed with weights, probablilities or probability distributions etc. The valid results may then be averaged based on their attributed weights, probablilities or probability distributions etc. The average may be a mean, weighted mean, sum of probability distributions, etc.

The calculated position of the mobile device may be reported. The reported position may be saved in a memory of the position determining system. The memory may be the memory 32 of the mobile communication device 30. Alternatively the memory may be another memory. The position data reported and saved to the memory may be used for non-live tracking of where a user of the mobile communication device has been moving. Alternatively or in combination, the reported position may be displayed on a display. The display may e.g. be a display 36 of the mobile communication device 30. Alternatively or in combination the display may be a display of another device of the position determining system 10.

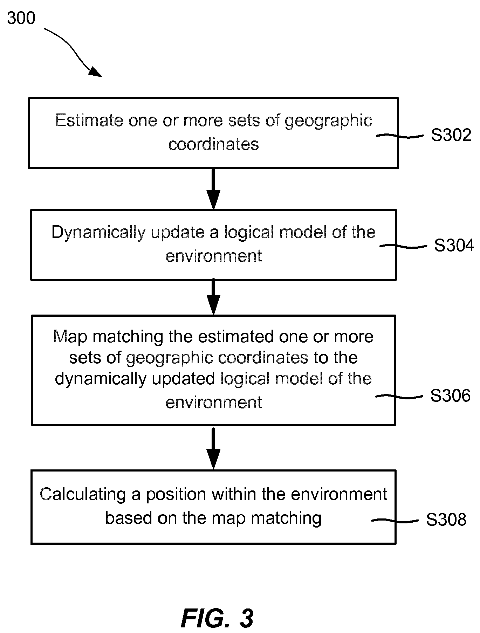

Fig. 3 is a block diagram of a method 300 for calculating a position of the mobile communication device within the environment. The method comprises estimating S302 one or more sets of geographic coordinates of the mobile communication device. Dynamically updating S304 a logical model of the environment based on a status signal pertaining to a status of the environment. Map matching S306 the estimated one or more sets of geographic coordinates of the mobile communication device to the dynamically updated logical model of the environment. Calculating S308 the position of the mobile communication device within the environment based on the map matching. The acts of the method do not necessarily need to be performed in the order listed above. Moreover, one or more of the acts of the method may be performed in parallel.

As also mentioned above, the status signal may indicate a status of a logical feature of the logical model of the environment. According to a non-limiting example, the status of a logical feature of the logical model of the environment may be a status of a door indicating if the door is open or closed. Alternatively or in combination, the status of a logical feature of the logical model of the environment may be a status of a room indicating if the room is occupied or unoccupied.

As also mentioned above, alternatively or in combination, the status signal may indicate an accessibility attribute of a sub-area of the environment. The accessibility attribute of a sub-area of the environment may indicate if a room is booked or free. Alternatively or in combination, the accessibility attribute of a sub-area of the environment may indicate if a user of the mobile communication device is scheduled for participating in a meeting or not. Alternatively or in combination, the accessibility attribute of a sub-area of the environment may indicate a classification of a user of the mobile communication device in connection with the sub-area. Examples of classifications are title, security class, gender and rank.

The method may further comprise receiving the status signal indicating a status of a logical feature of the logical model of the environment from a sensor located within the environment.

The person skilled in the art realizes that the present invention by no means is limited to the preferred embodiments described above. On the contrary, many modifications and variations are possible within the scope of the appended claims.

For example, according to the embodiment of Fig. 1 the logical circuitry 34 is comprised in the mobile communication device 30. However, it is realized that the logical circuitry 34 may be comprised in other devices as well. It is also realized that the logical circuitry 34 even may be distributed to different devices.

Moreover, according to the embodiment of Fig. 1 the memory 32 is comprised in the mobile communication device 30. However, it is realized that the memory 32 may be comprised in other devices as well. It is also realized that the memory 32 even may be distributed to different devices.

In the embodiments discussed above in connection of Fig. 1 the position determining system 10 comprises one or more stationary communication devices 20. However, for some embodiments of the position determining system 10 the one or more stationary communication devices 20 are optional. Especially for embodiment of the position determining system 10 wherein the one or more sets of geographical coordinates of the mobile communication device are estimated using dead reckoning or similar methods.

The memory 32 comprising the logical model of the environment may alternatively or in combination be comprised in a cloud service.

Additionally, variations to the disclosed embodiments can be understood and effected by the skilled person in practicing the claimed invention, from a study of the drawings, the disclosure, and the appended claims.

## Claims

1. A method for calculating a position of a mobile communication device (30) within an environment, the method comprising:
estimating (S302) one or more sets of geographic coordinates of the mobile communication device;
dynamically updating (S304) a logical model of the environment based on a status signal pertaining to a status of the environment;
map matching (S306) the estimated one or more sets of geographic coordinates of the mobile communication device to the dynamically updated logical model of the environment; and
calculating (S308) the position of the mobile communication device within the environment based on the map matching.

2. The method according to claim 1, wherein the status signal indicates a status of a logical feature of the logical model of the environment.

3. The method according to claim 2, wherein the status of the logical feature of the logical model of the environment is any one of a status of a door indicating if the door is open or closed, and a status of a room indicating if the room is occupied or unoccupied.

4. The method according to claim 2 or 3, further comprising receiving the status signal indicating the status of the logical feature of the logical model of the environment from a sensor (40a; 40b) located within the environment.

5. The method according to any one of claims 1-4, wherein the status signal indicates an accessibility attribute of a sub-area of the environment.

6. The method according to claim 5, wherein the accessibility attribute of the sub-area of the environment is any one of if a room is booked or free, if a user of the mobile communication device is scheduled for participating in a meeting or not, and classification of a user of the mobile communication device.

7. A position determining system for calculating a position of a mobile communication device (30) within an environment, the position determining system comprising:
a memory (32) comprising a logical model of the environment;
a status signal receiver (33) configured to receive a status signal pertaining to a status of the environment; and
logical circuitry (34) configured to:
dynamically update the logical model of the environment based on the status signal;
estimate one or more sets of geographic coordinates of the mobile communication device;
map match the estimated one or more sets of geographic coordinates of the mobile communication device to the dynamically updated logical model of the environment; and
calculate the position of the mobile communication device within the environment based on the map match.

8. The position determining system according to claim 7, further comprising a sensor (40a, 40b) configured to sense a status of a logical feature of the logical model of the environment and to communicate the status of the logical feature as the status signal.

9. The position determining system according to claim 8, wherein the sensor (40a) is a sensor sensing a status of a door being open or closed.

10. The position determining system according to claim 8, wherein the sensor (40b) is a sensor sensing a status of a room being occupied or unoccupied.

11. The position determining system according to any one of claims 7-10, wherein the logical circuitry (34) is comprised in the mobile communication device.

12. The position determining system according to any one of the claims 7-11, wherein the status signal receiver (33) is comprised in the mobile communication device.

13. The position determining system according to any one of the claims 7-12, wherein the memory (32) is comprised in the mobile communication device and/or in a cloud service.

14. The position determining system according to any one of the claims 7-13, further comprising a stationary communication device (20) configured to send a position signal comprising data pertaining to a set of geographical coordinates of the stationary communication device;
wherein the mobile communication device comprises a position signal receiver (31) configured to receive the position signal from the stationary communication device; and
wherein the logical circuitry is configured to estimate one or more of the one or more sets of geographic coordinates of the mobile communication device based on the position signal.

15. The position determining system according to any one of the claims 7-14, wherein the mobile communication device comprises one or more built-in sensors (35) configured to register data for estimating movement of the mobile communication device, wherein the logical circuitry further is configured to estimate movement of the mobile communication device based on the data registered by the one or more built-in sensors, and wherein the logical circuitry is configured to estimate one or more of the one or more sets of geographic coordinates of the mobile communication device based on the estimated movement of the mobile communication device.
